# FASCICULE DE BREVET EUROPEEN

(11) **EP 3 008 788 B1**
(45) Date de publication et mention de la délivrance du brevet: **25.01.2017**
(21) Numéro de dépôt: 14730162.6
(22) Date de dépôt: 13.06.2014
(51) Int. Cl.: H02J 3/38, H02J 13/00, H04B 3/54, H04B 3/56

(54) **INSTALLATION ÉLECTRIQUE AVEC MODULE PASSERELLE AMÉLIORÉE**
ELEKTRISCHE ANLAGE MIT VERBESSERTEM SCHNITTSTELLENMODUL
ELECTRICAL FACILITY WITH IMPROVED GATEWAY MODULE

(30) Priorité: 14.06.2013 EP 13172061
(43) Date de publication de la demande: 20.04.2016
(73) Titulaire: Belenos Clean Power Holding AG, 2502 Bienne (CH)
(72) Inventeur: FRANCESCUTTO, Gianni, CH-2504 Bienne (CH); FASANO, Mariano, CH-2952 Cornol (CH)
(74) Mandataire: Goulette, Ludivine
(86) Numéro de dépôt international: PCT/EP2014/062440
(87) Numéro de publication internationale: WO 2014/198932

(56) Documents cités:
- US-A1- 2011 031 814
- KUROKAWA K ET AL: "Conceptual considerations on PV systems composed of AC modules", SOLAR ENERGY MATERIALS AND SOLAR CELLS, ELSEVIER SCIENCE PUBLISHERS, AMSTERDAM, NL, vol. 47, no. 1-4, 1 octobre 1997 (1997-10-01), pages 243-250, XP004099644, ISSN: 0927-0248, DOI: 10.1016/S0927-0248(97)00045-7
- E. ROMAN ET AL: "Intelligent PV Module for Grid-Connected PV Systems", IEEE TRANSACTIONS ON INDUSTRIAL ELECTRONICS, vol. 53, no. 4, 1 juin 2006 (2006-06-01), pages 1066-1073, XP055087344, ISSN: 0278-0046, DOI: 10.1109/TIE.2006.878327

## Description

La présente invention concerne un module passerelle pour un réseau électrique, une installation. Le module passerelle est apte à recevoir un signal de puissance comprenant une composante modulée pour véhiculer des informations d'un module électrique produisant de l'électricité et apte à traiter ce signal de puissance pour fournir audit réseau électrique un signal compatible, ledit module passerelle comprenant une unité principale comportant un circuit de commande pilotant un circuit de lecture pour lire les informations de la composante modulée et un circuit de filtrage pour filtrer cette composante modulée de sorte à fournir au réseau électrique un signal compatible.

### ARRIERE PLAN TECHNOLOGIQUE

La présente invention concerne le domaine des installations électriques pour un réseau domestique et en particuliers des installations électriques utilisant des énergies renouvelables.

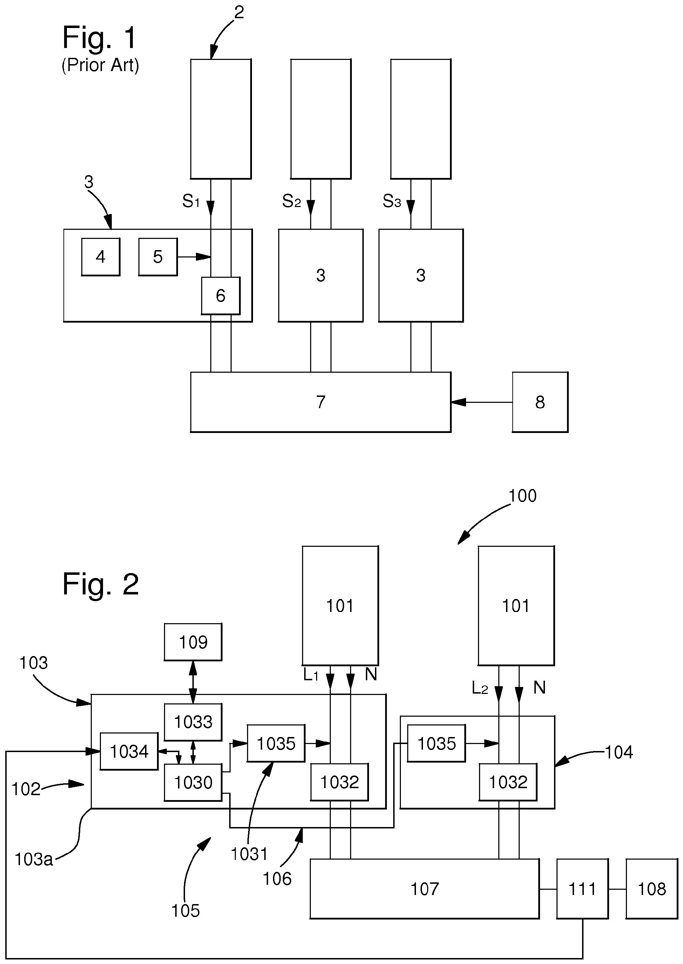

Une telle installation 1, visible à la figure 1, comprend généralement un réseau domestique connecté au réseau électrique public et à des systèmes 2 générant de l'électricité à partir des énergies renouvelables comme des éoliennes ou des panneaux solaires. Ces systèmes peuvent comprendre un module solaire ou un module éolien. Ces systèmes générant de l'électricité à partir des énergies renouvelables sont munis d'un ou plusieurs micro-onduleurs de sorte à fournir un signal en sortie compatible avec le réseau domestique. Ce signal S1 est envoyé à une unité passerelle 3. Ce signal S1 comprend une composante modulée permettant l'échange d'informations entre les systèmes générant de l'électricité à partir des énergies renouvelables et l'unité passerelle.

Cette unité passerelle 3 est utilisée pour lire les données de la composante modulée et pour ensuite la filtrer afin que le signal de sortie soit débarrassé de toutes imperfections avant d'être injecté dans le réseau domestique. Cette unité comprend donc un filtre 6, un circuit de lecture 5 et un circuit de commande 4 pour commander le tout.

Dans l'art antérieur, si les systèmes générant de l'électricité à partir des énergies renouvelables comprennent une pluralité de modules, alors chaque module fournit un signal de puissance S1, S2, S3 et est associé à une unité passerelle 3.

L'inconvénient de cette configuration est qu'elle nécessite d'avoir une unité passerelle par module. Comme chaque unité passerelle comprend un filtre 6, un circuit de lecture 5 et un circuit de commande 4, la multiplication du nombre de modules et donc du nombre d'unités passerelles entraîne une hausse des coûts.

De plus, il est connu de l'article E.roman et al : »intelligent PV module for Grid-Connected PV systems », IEEE TRANSACTIONS ON INDUSTRIAL ELECTRONICS, vol 53, no4, 1/6/2006, des systèmes comprenant une pluralité de modules solaires, chaque module solaire comprenant un panneau solaire. Chaque panneau solaire est associé à un convertisseur DC-DC ayant une fonction de détection du point de fonctionnement maximum également appelé MPPT. Le tout étant relié à un convertisseur DC/AC pour alimenter un réseau électrique.

Ces panneaux solaires sont reliés à un circuit de contrôle de sorte que celui-ci récupère des informations provenant du panneau.

Toutefois, ces systèmes sont conçus pour des réseaux monophasés et, quand ils sont appliqués aux réseaux multiphasés, ils nécessitent une unité passerelle pour chaque phase supplémentaire.

Il est également connu du document US2011/0031814, un système comprenant plusieurs panneaux photovoltaïques, les panneaux photovoltaïques sont agencés en groupes et reliés à un circuit inverseur via une boite de jonction. Cette boite de jonction permet de fournir des données provenant des panneaux solaires. Le but ici est d'avoir une seule unité passerelle pour l'ensemble des panneaux photovoltaïques, l'application à un réseau multiphasé ne semble donc pas prévu.

Le document Kurokawa K et Al. « conceptual consideration on PV system composed of AC modules », solar energy materials and solar cells, elsevier science publisher, Amsterdam, NL, est un document décrivant des systèmes photovoltaïques comprenant des modules AC, un tel module AC étant défini comme comprenant un module photovoltaïque et un inverseur.

Toutefois, les systèmes décris dans le document ci-dessus ne décrivent pas la présence de module passerelle et ne peuvent donc pas être utilisés pour les applications de la présente invention.

### RESUME DE L'INVENTION

L'invention a pour but de fournir un module passerelle d'un réseau électrique qui est moins coûteux, modulable et plus compact.

A cet effet, l'invention concerne un module passerelle pour une installation électrique, ledit module passerelle étant apte à recevoir d'un module électrique, un signal de puissance à travers une ligne de phase et une ligne de neutre, ledit signal de puissance comprenant une composante modulée pour véhiculer des informations dudit module électrique produisant de l'électricité, et apte à traiter ce signal de puissance pour fournir à un réseau électrique un signal compatible, ledit module passerelle comprenant une unité principale comportant un circuit de contrôle pilotant des moyens d'interface pour gérer les informations de la composante modulée du signal de puissance et un circuit de filtrage pour filtrer cette composante modulée et rendre le signal de puissance compatible avec le réseau, caractérisé en ce que ledit module passerelle comprend en outre au moins une unité secondaire munie d'un circuit de filtrage pour filtrer le signal de puissance fournit par la ligne de phase et la ligne de neutre d'un module électrique supplémentaire et agencée pour que les moyens d'interface puissent gérer les informations de la composante modulée du signal de puissance fournit par le module électrique supplémentaire, ladite au moins une unité secondaire étant commandée par le circuit de contrôle de l'unité principale.

Cette configuration a l'avantage de permettre de gérer facilement un réseau monophasé et un réseau triphasé tout en réduisant drastiquement les coûts tout en ayant un module passerelle plus compact.

Dans un premier mode de réalisation avantageux, chaque unité secondaire traite le signal de puissance d'un module électrique supplémentaire, chaque unité secondaire étant commandée par le circuit de contrôle de l'unité principale.

Dans un second mode de réalisation avantageux, le module électrique est composée d'au moins un élément fournissant de l'électricité.

Dans un troisième mode de réalisation avantageux, chaque module électrique comprend en outre au moins un micro-onduleur pour fournir le signal de puissance.

Dans un autre mode de réalisation avantageux, les moyens d'interface comprennent un circuit de communication sur l'unité principale et un circuit de communication par unité secondaire.

Dans un autre mode de réalisation avantageux, les moyens d'interface comprennent des éléments de couplage passif permettant de faire la connexion entre le circuit de contrôle et au moins la ligne de phase et la ligne du neutre d'un module électrique lié à l'unité principale ou à une unité secondaire.

Dans un autre mode de réalisation avantageux, les moyens d'interface comprennent des éléments de couplage passif inductif ou des éléments de couplage passif capacitif ou une combinaison d'éléments de couplage passif inductif et d'éléments de couplage passif capacitif.

Dans un mode de réalisation avantageux, les moyens d'interface comprennent une pluralité d'éléments de couplage inductif comportant chacun une bobine du primaire couplée par induction à une première bobine du secondaire connectée électriquement à la ligne de phase et à la ligne du neutre d'un module électrique, et à une seconde bobine du secondaire, la bobine du primaire étant connectée à la seconde bobine du primaire de l'unité principale ou de l'unité secondaire précédente alors que la seconde bobine du secondaire est connectée à la bobine du primaire de l'unité secondaire suivante, l'élément de couplage inductif étant agencé pour que la bobine du primaire soit connecté au circuit de contrôle.

Dans un mode de réalisation avantageux, les moyens d'interface comprennent une pluralité d'éléments de couplage capacitif agencés sur chaque unité secondaire, chaque élément de couplage capacitif comportant une première capacité connectée entre une première borne de connexion et la ligne de phase du module électrique supplémentaire lié à ladite unité secondaire ainsi qu'une seconde capacité connectée entre une seconde borne de connexion et la ligne de neutre du module électrique supplémentaire, les premières bornes de connexion des unités secondaires étant reliées entre elles et reliées à la ligne de phase du module électrique lié à l'unité principale, les secondes bornes de connexion des unités secondaires étant reliées entre elles et reliées à la ligne de neutre du module électrique lié à l'unité principale, le circuit de contrôle comprenant un coupleur de phase connecté par une première de ses bornes aux premières bornes de connexion des unités secondaires et par une seconde de ses bornes aux secondes bornes de connexion des unités secondaires.

Dans un mode de réalisation avantageux, en sortie de l'unité principale et des unités secondaires, les phases filtrées des modules électroniques, sont interconnectées de façon à créer un signal triphasé pour le réseau électrique.

Dans un mode de réalisation avantageux, chaque unité secondaire est connectée électriquement à l'unité principale.

Dans un mode de réalisation avantageux, le module électrique est un module solaire, chaque élément fournissant de l'électricité étant un panneau solaire.

Dans un mode de réalisation avantageux, le module électrique est un module éolien, chaque élément fournissant de l'électricité étant une éolienne

### BREVE DESCRIPTION DES FIGURES

Les buts, avantages et caractéristiques du module passerelle pour une installation selon la présente invention apparaîtront plus clairement dans la description détaillée suivante d'au moins une forme de réalisation de l'invention donnée uniquement à titre d'exemple non limitatif et illustrée par les dessins annexés sur lesquels :
- la figure 1 représente de manière schématique une installation avec un module passerelle selon l'art antérieur;
- la figure 2 représente de manière schématique un premier mode de réalisation de l'installation avec un module passerelle selon l'invention;
- la figure 3 représente de manière schématique un agencement particulier de l'installation avec un module passerelle selon l'invention;
- la figure 4 représente de manière schématique une première variante d'un second mode de réalisation de l'installation avec un module passerelle selon l'invention;
- la figure 5 représente de manière schématique une seconde variante d'un second mode de réalisation de l'installation avec un module passerelle selon l'invention;

### DESCRIPTION DETAILLEE

La présente invention procède de l'idée générale inventive qui consiste à avoir un réseau électrique alimenté par des modules électriques, le tout étant géré par un module passerelle modulable, bon marché et plus compact.

Sur la figure 2, une installation 100 est représentée. Cette installation 100 comprend un réseau électrique comme un réseau domestique 107. Ce réseau domestique 107 est premièrement connecté au réseau électrique public 108. Ce réseau domestique 107 est également connecté à au moins un module électrique 101. Ce module électrique 101 est un module produisant de l'électricité comme par exemple un module solaire ou éolien ou électrochimique ou hydroélectrique. Ce module électrique 101 est composé d'au moins un élément 101b fournissant de l'énergie électrique. Par exemple si le module électrique est un module solaire, on considèrera que l'élément fournissant de l'énergie électrique est un panneau solaire, chaque panneau solaire étant composé d'une multitude de cellules photovoltaïques. Bien entendu, il est envisageable qu'un module électrique 101 comprenne plusieurs panneaux solaires ou éoliennes montés en parallèle, cela dépend de la puissance admissible par module électrique 101.

Chaque module électrique 101 comprend en outre un ou plusieurs micro-onduleurs 101 a, chaque micro-onduleur 101a étant associé à un élément fournissant de l'énergie électrique 101b. Le micro-onduleur 101a est utilisé pour rendre compatible le signal fournit par l'élément fournissant de l'énergie électrique 101b. Ce micro-onduleur 101a est utilisé afin de fournir un signal de puissance Si en sortie du module électrique 101 à travers une ligne de phase Li et une ligne de neutre N. Ce signal de puissance Si comprend une composante modulée. Cette composante est modulée en fréquence suivant la méthode des courants porteurs de ligne. Cette composante modulée est alors utilisée pour le transport d'informations.

En effet, l'installation 100 comprend en outre un module passerelle 102. Ce module passerelle 102 est un module utilisé pour adapter le signal de puissance Si avec sa composante modulée au réseau domestique.

Pour cela, le module passerelle 102 comprend une première unité passerelle ou unité principale 103. Cette unité principale 103 comprend un circuit de contrôle 1030 qui commande des moyens d'interface 1031 pour gérer les informations de la composante modulée et un circuit de filtrage 1032 pour filtrer cette composante modulée de sorte à fournir au réseau électrique un signal compatible, filtré : L'unité principal 103 comprend en outre un circuit de transmission de données 1033 utilisant par exemple le format Ethernet et qui est utilisé pour la récolte des informations ou le diagnostic à distance. Ce circuit de transmission de données 1033 communique par exemple avec un élément portable 109 comme une tablette ou un téléphone et faisant office de télécommande. L'unité principal 103 comprend également un circuit d'interface de lecture d'information 1034 auquel est relié un compteur d'énergie 111 disposé entre le réseau domestique 107 et le réseau électrique public 108 afin de connaître la puissance actuelle consommée dans la maison, c'est-à-dire par le réseau domestique 107. Cela permet de pouvoir régler la puissance produite par les modules électriques 101.

Les informations transmises se divisent en deux types d'informations : d'une part les informations envoyées depuis le module électrique 101 vers l'unité principale 103 du module passerelle 102 et d'autre part les informations reçues par le module électrique 101 depuis l'unité principale 103 du module passerelle 102.

Les informations envoyées depuis le module électrique 101 vers l'unité principale 103 sont des informations concernant, par exemple, l'état des cellules photovoltaïques de sorte que si une ou des cellules venaient à être moins performantes, une information serait envoyée au module passerelle 103 ou un compte rendu des données sera réalisé et mis à dispositions dans le module 101. Par contre, les informations reçues par le module électrique 101 depuis l'unité principale du module passerelle 103 sont des informations du type de configuration ou de commande. En effet, suite à une information venant du module électrique 101 ou par programmation ou suite à une information externe comme la météo, le circuit de contrôle 1030 peut envoyer des informations de commande au module électrique 101. Ces informations peuvent entraîner une coupure de certaines cellules ou une baisse de leurs performances. Un exemple d'information est la consigne de puissance de production du module 101

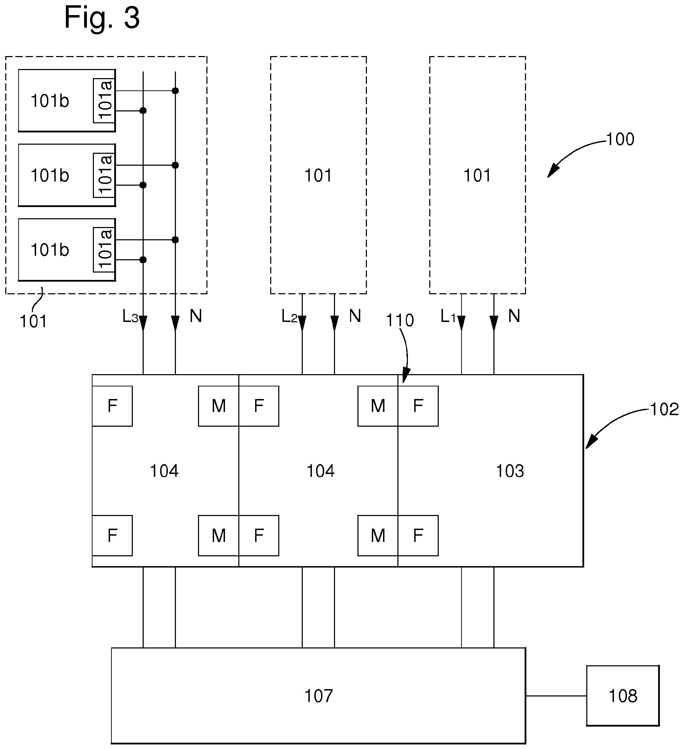

Avantageusement, lorsque l'installation 100 comprend d'autres modules électriques 101, la présente invention prévoit que le module passerelle 102 comprend des unités secondaires 104. En effet, l'unité principale 103 est agencée pour être connectée à un seul module électrique 101 fournissant un signal de puissance S1 porté par la ligne de phase L₁. Toutefois, certaines installations nécessitent plus de puissance. A ce titre, ces installations peuvent fonctionner sous un réseau triphasé. Un tel réseau comprend alors une pluralité de phases. Il est envisageable que plusieurs modules électriques 101 soient utilisés pour alimenter le réseau domestique 107. Ces autres modules électriques fournissant un signal de puissance Si porté par la ligne de phase Li, par exemple le second module électrique 101 fournit un signal de puissance S2 porté par la ligne de phase L₂ alors qu'un troisième module électrique 101 fournit un signal de puissance S3 porté par la ligne de phase L₃ comme visible à la figure 3. Ces lignes de phase L₂ et L₃ sont donc utilisées pour la réalisation du réseau triphasé par une mise en commun des lignes neutres de chacune des trois unités.

Ces unités secondaires 104 du module passerelle 102 sont connectées chacune à un module électrique 101 c'est à dire que l'unité secondaire 104 reçoit le signal de puissance d'un seul module électrique 101. Chacune de ces unités secondaires 104 est agencée pour que les moyens d'interface 1031 puissent s'occuper d'une ligne de phase Li et lire les informations de la composante modulée du signal de puissance Si du module électrique 101 associé. Ces unités secondaires 104 comprennent un circuit de filtrage 1032 pour filtrer la composante modulée du signal de puissance du module électrique 101 associé. Ainsi, si l'installation 100 comprend trois modules électriques 101, le module passerelle 102 comprend une unité principale 103 et deux unités secondaires 104. Les unités secondaires 104 n'ont pas de circuits de transmission de données 1033 et de circuits d'interface de lecture d'information 1034.

On constate donc que ces unités secondaires 104 ne sont pas pourvues d'un circuit de contrôle 1030. En effet, avantageusement selon l'invention, les unités secondaires 104 sont contrôlées par l'unité de contrôle 1030 de l'unité principale 103. Cette unité de contrôle 1030 de l'unité principale 103 commande les moyens d'interfaces 1031 et le circuit de filtrage 1032 de chaque unité secondaire 104.

Cette configuration a l'avantage de permettre de gérer facilement un réseau monophasé et un réseau triphasé tout en réduisant drastiquement les coûts et la complexité de l'installation 100 et tout en ayant un module passerelle 102 plus compact. En effet, le module passerelle 102 selon la présente invention ne comprend qu'une seule unité principale 103 pour une pluralité de modules électriques 101 de sorte qu'il n'y ait qu'un seul circuit de contrôle 1030 par module passerelle 102. Par ailleurs, cette configuration de n'avoir qu'une seule unité avec un circuit de contrôle 1030 qui contrôle toutes les unités permet d'avoir des unités secondaires 104 qui sont plus compactes.

En sortie de l'unité principale 103 et des unités secondaires 104, les signaux sont connectés pour former, à partir des phases de chaque module électronique 101, le signal triphasé du système triphasé pour le réseau électrique domestique et/ou public.

L'invention permet donc de gérer un ou plusieurs réseaux monophasés ou un réseau triphasé voir de gérer un réseau triphasé et un ou plusieurs réseaux monophasés.

Dans un premier mode de réalisation visible à la figure 3, les moyens d'interface 1031 comprennent un circuit de communication 1035 par unité principale 103 ou secondaire 104. On comprend par-là que l'unité principale 103 comprend un circuit de communication 1035 et que chaque unité secondaire 104 comprend également un circuit de communication 1035. Ces circuits de communication 1035 envoient leurs informations au circuit de contrôle 1030 de l'unité principale 103. Chaque circuit de communication 1035 comprend un transformateur c'est-à-dire une bobine du primaire et une bobine du secondaire, la bobine du primaire étant connectée à un élément de commande alors que la bobine du secondaire est connectée à la ligne de phase Li et à la ligne du neutre N.

Dans un second mode de réalisation, les moyens d'interface 1031 utilisent un couplage passif et notamment des éléments de couplage passif 1031 a.

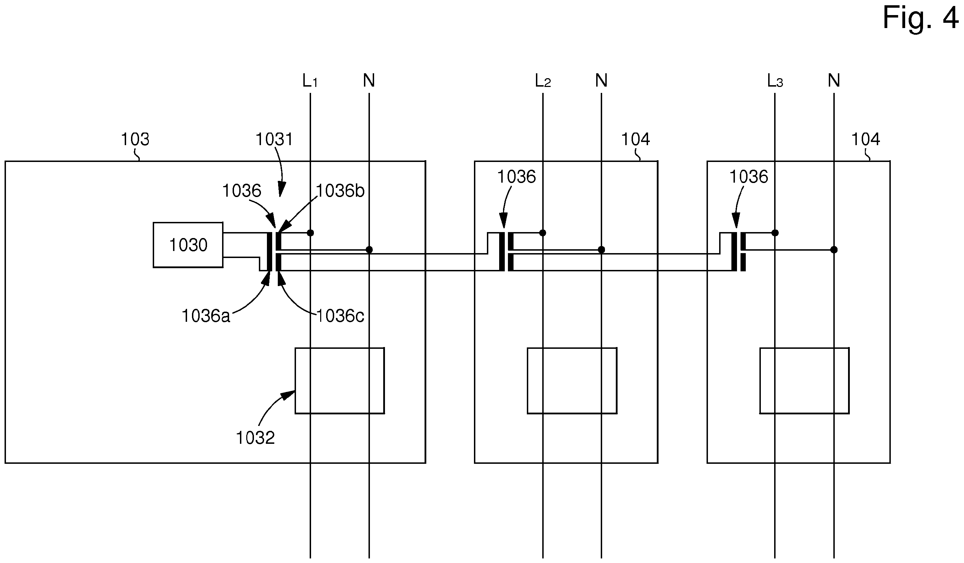

Dans une première variante visible à la figure 4, le couplage passif est inductif. Dans l'unité principale 103, le circuit de contrôle 1030 est connecté à un premier élément de couplage inductif 1036. Ce premier élément de couplage inductif comporte une bobine du primaire 1036a munie de deux bornes de contact et couplée par induction à une première bobine du secondaire 1036b et une seconde bobine du secondaire 1036c. La première bobine du secondaire 1036b est munie de deux bornes de contact afin d'être connectée électriquement à la ligne de phase L₁ et à la ligne du neutre N. La seconde bobine du secondaire 1036c munie de deux bornes de contact afin d'être connectée électriquement à un second élément de couplage inductif 1036 situé sur une première unité secondaire 104.

Ce second élément de couplage inductif 1036 de la première unité secondaire 104 comporte une bobine du primaire 1036a connectée à la seconde bobine du secondaire 1036c du premier élément de couplage inductif 1036. Le second élément de couplage inductif 1036 de la première unité secondaire 104 comporte en outre une première bobine du secondaire 1036b et une seconde bobine du secondaire 1036c couplées par induction à la bobine du primaire 1036a.

Chaque unité secondaire 104 est ainsi munie d'un élément de couplage inductif 1036 qui comporte d'une bobine du primaire 1036a couplée par induction à une première bobine du secondaire 1036b et une seconde bobine du secondaire 1036c, la bobine du primaire 1036a étant connectée à la seconde bobine du primaire 1036c de l'unité principale 103 ou secondaire 104 précédente alors que la seconde bobine du secondaire 1036c est connectée à la bobine du primaire 1036 de l'unité secondaire 104 suivante.

Cette variante du coupage passif permet de limiter les coûts et d'avoir des unités secondaires 104 compactes car il n'y a que le circuit de contrôle 1030 du l'unité principale 103 pour commander les différentes éléments de couplage inductif 1036.

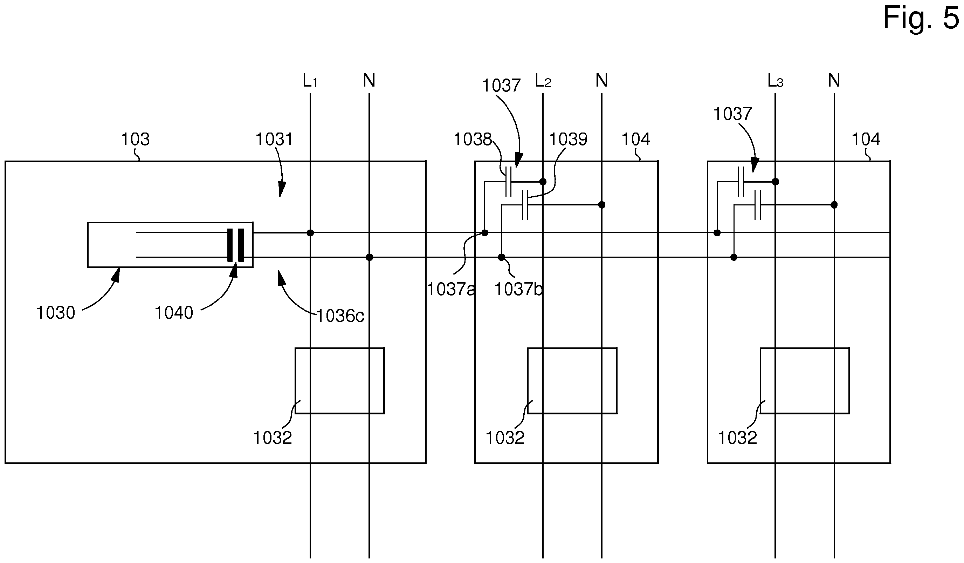

Dans une seconde variante visible à la figure 5, le couplage passif est capacitif. Dans l'unité principale 103, le circuit de contrôle 1030 est connecté électriquement à la ligne de phase L₁ et à la ligne du neutre N du module électrique 101 lié à l'unité principale 103.

Les unités secondaires 104 comportent chacune un élément de couplage capacitif 1037. Cet élément de couplage capacitif 1037 comprend une première capacité 1038 connectée entre une première borne de connexion 1037a et la ligne de phase Li ainsi qu'une seconde capacité 1039 connectée entre une seconde borne de connexion 1037b et la ligne de neutre N. Le tout est agencé pour que les premières bornes de connexion 1037a des unités secondaires 104 soient reliées entre elles et connectées à la ligne de phase L₁ de l'unité principale 103 et pour que les secondes bornes de connexion 1037b des unités secondaires 104 soient reliées entre elles et connectées à la ligne de neutre N de l'unité principale 103.

Afin de d'effectuer un couplage entre les différentes phases, le circuit de contrôle 1030 comprend un coupleur de phase 1040 constitué d'un transformateur c'est-à-dire d'une bobine primaire et d'une bobine secondaire interagissant toutes les deux.

Pour que l'unité de contrôle de l'unité principale 103 puisse communiquer et commander les unités secondaires 104, il est prévu que des moyens de communication 105 soit agencés entre l'unité principale et les unités secondaires.

Dans un premier exemple, les moyens de communication 105 comprennent des moyens de communications sans fil tel qu'un système wifi ou un système Bluetooth® ou WiMax. Ces moyens de communications sans fil permettent d'avoir les unités secondaires 104 et l'unité principale 103 qui sont disposées dans des pièces différentes si l'installation 100 l'exige. De plus, ces moyens de communications sans fil peuvent être utilisés pour envoyer des informations vers un terminal de contrôle pour l'utilisateur. Celui-ci peut alors commander ou surveiller l'installation à distance.

Dans un second exemple, les moyens de communication 105 comprennent des moyens de communication filaires 106 ou physiques c'est-à-dire qu'il y a une connexion physique entre l'unité principale 103 et les unités secondaires 104. Cette solution permet d'avoir une meilleure compacité des unités secondaires 104 car elle ne nécessite pas de circuits spécifiques pour la communication sans fil qui doivent être alimentés.

Astucieusement selon l'invention, il peut être prévu que l'unité principale 103 et les unités secondaires 104 s'emboitent les unes aux autres. Pour cela, ces unités sont intégrées dans un boitier 103a. Ce boitier, de préférence en plastique, est parallélépipédique permettant avantageusement de fixer les différents boitiers entre eux bord à bord comme visible à la figure 3. Cet agencement permet de munir lesdits boitiers d'un système de clipsage 110. Ce système de clipsage 110 est réalisé de sorte à remplir deux fonctions. La première fonction est de solidariser les boitiers entre eux alors que la seconde fonction est d'assurer une connexion électrique. Pour cela, le système de clipsage 110 comprend au moins un élément male (M) et au moins un élément femelle (F) chacun situé sur un bord d'une unité. Dans un exemple particulier, le système de clipsage comprend deux éléments males (M) et deux éléments femelles (F) de sorte à améliorer la solidarisation de deux unités comme visible à la figure 3.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

## Revendications

1. Module passerelle (102) pour une installation électrique (100), ledit module passerelle étant apte à recevoir d'un module électrique (101), un signal de puissance (Si) à travers une ligne de phase (Li) et une ligne de neutre (N), ledit signal de puissance comprenant une composante modulée pour véhiculer des informations dudit module électrique (101) produisant de l'électricité, et apte à traiter ce signal de puissance pour fournir à un réseau électrique (107) un signal compatible, ledit module passerelle comprenant une unité principale (103) comportant un circuit de contrôle (1030) pilotant des moyens d'interface (1031) pour gérer les informations de la composante modulée du signal de puissance (Si) et un circuit de filtrage (1032) pour filtrer cette composante modulée et rendre le signal de puissance compatible avec le réseau (107), **caractérisé en ce que** ledit module passerelle (102) comprend en outre au moins une unité secondaire (104) munie d'un circuit de filtrage (1032) pour filtrer le signal de puissance (Si) fournit par la ligne de phase (Li) et la ligne de neutre (N) d'un module électrique (101) supplémentaire et agencée pour que les moyens d'interface (1031) puissent gérer les informations de la composante modulée du signal de puissance (Si) fournit par le module électrique (101) supplémentaire, ladite au moins une unité secondaire étant commandée par le circuit de contrôle (1030) de l'unité principale (103).

2. Module passerelle selon la revendication 1, **caractérisé en ce que** chaque unité secondaire (104) traite le signal de puissance (Si) d'un module électrique (101) supplémentaire, chaque unité secondaire étant commandée par le circuit de contrôle (1030) de l'unité principale (103).

3. Module passerelle selon la revendication 1 ou 2, **caractérisé en ce que** le module électrique (101) est composée d'au moins un élément (101 b) fournissant de l'électricité.

4. Module passerelle selon la revendication 3, **caractérisé en ce que** chaque module électrique (101) comprend en outre au moins un micro-onduleur (101 a) pour fournir le signal de puissance (Si).

5. Module passerelle selon l'une des revendications précédentes, **caractérisé en ce que** les moyens d'interface (1031) comprennent un circuit de communication (1035) sur l'unité principale (103) et un circuit de communication (1035) par unité secondaire (104).

6. Module passerelle selon l'une des revendications 1 à 4, **caractérisé en ce que** les moyens d'interface (1031) comprennent des éléments de couplage passif permettant de faire la connexion entre le circuit de contrôle (1030) et au moins la ligne de phase (Li) et la ligne du neutre (N) d'un module électrique (101) lié à l'unité principale ou à une unité secondaire.

7. Module passerelle selon la revendication 6, **caractérisé en ce que** les moyens d'interface (1031) comprennent des éléments de couplage passif inductif (1036) ou des éléments de couplage passif capacitif (1037) ou une combinaison d'éléments de couplage passif inductif (1036) et d'éléments de couplage passif capacitif (1037).

8. Module passerelle selon la revendication 6 ou 7, **caractérisé en ce que** les moyens d'interface (1031) comprennent une pluralité d'éléments de couplage inductif (1036) comportant chacun une bobine du primaire (1036a) couplée par induction à une première bobine du secondaire (1036b) connectée électriquement à la ligne de phase (Li) et à la ligne du neutre (N) d'un module électrique (101), et à une seconde bobine du secondaire (1036c), la bobine du primaire étant connectée à la seconde bobine du primaire de l'unité principale ou de l'unité secondaire précédente alors que la seconde bobine du secondaire est connectée à la bobine du primaire de l'unité secondaire suivante, l'élément de couplage inductif étant agencé pour que la bobine du primaire soit connecté au circuit de contrôle (1030).

9. Module passerelle selon la revendication 6 ou 7, **caractérisé en ce que** les moyens d'interface (1031) comprennent une pluralité d'éléments de couplage capacitif (1037) agencés sur chaque unité secondaire (104), chaque élément de couplage capacitif comportant une première capacité (1038) connectée entre une première borne de connexion (1037a) et la ligne de phase (Li) du module électrique supplémentaire (101) lié à ladite unité secondaire (104) ainsi qu'une seconde capacité (1039) connectée entre une seconde borne de connexion (1037b) et la ligne de neutre (N) du module électrique supplémentaire (101), les premières bornes de connexion (1037a) des unités secondaires étant reliées entre elles et reliées à la ligne de phase du module électrique (101) lié à l'unité principale (104), les secondes bornes de connexion (1037b) des unités secondaires (104) étant reliées entre elles et reliées à la ligne de neutre (N) du module électrique (101) lié à l'unité principale (103), le circuit de contrôle (1030) comprenant un coupleur de phase (1040) connecté par une première de ses bornes aux premières bornes de connexion (1037a) des unités secondaires et par une seconde de ses bornes aux secondes bornes de connexion (1037b) des unités secondaires.

10. Module passerelle selon l'une des revendications précédentes, **caractérisé en ce qu'**en sortie de l'unité principale (103) et des unités secondaires (104), les phases (Li) filtrées des modules électroniques (101), sont interconnectées de façon à créer un signal triphasé pour le réseau électrique (107).

11. Module passerelle selon l'une des revendications précédentes, **caractérisé en ce que** chaque unité secondaire est connecté à l'unité principale par des moyens de communication filaires (106).

12. Module passerelle selon l'une des revendications précédentes, **caractérisé en ce que** le module électrique est un module solaire, chaque élément (101 b) fournissant de l'électricité étant un panneau solaire.

13. Module passerelle selon l'une des revendications 1 à 11, **caractérisé en ce que** le module électrique est un module éolien, chaque élément (101 b) fournissant de l'électricité étant une éolienne

## Patentansprüche

1. Gatewaymodul (102) für eine elektrische Anlage (100), wobei das Gatewaymodul geeignet ist, über eine Phasenleitung (Li) und eine Neutralleitung (N) von einem elektrischen Modul (101) ein Leistungssignal (Si) zu empfangen, wobei das Leistungssignal eine modulierte Komponente enthält, um Informationen des elektrischen Moduls (101), das Elektrizität erzeugt, zu übertragen, und geeignet ist, dieses Leistungssignal zu verarbeiten, um an ein Stromnetz (107) ein kompatibles Signal zu liefern, wobei das Gatewaymodul eine Haupteinheit (103) umfasst, die eine Steuerschaltung (1030), die Schnittstellenmittel (1031) steuert, um die Informationen von der modulierten Komponente des Leistungssignals (Si) zu verwalten, und eine Filterschaltung (1032), um diese modulierte Komponente zu filtern und um das Leistungssignal mit dem Netz (107) kompatibel zu machen, enthält, **dadurch gekennzeichnet, dass** das Gatewaymodul (102) außerdem mindestens eine Sekundäreinheit (104) umfasst, die mit einer Filterschaltung (1032) versehen ist, um das von der Phasenleitung (Li) und von der Neutralleitung (N) eines zusätzlichen elektrischen Moduls (101) gelieferte Leistungssignal (Si) zu filtern, und dafür ausgelegt ist, dass die Schnittstellenmittel (1031) Informationen der modulierten Komponente des Leistungssignals (Si), das von dem zusätzlichen elektrischen Modul (101) geliefert wird, verwalten können, wobei die mindestens eine Sekundäreinheit durch die Steuerschaltung (1030) der Haupteinheit (103) gesteuert wird.

2. Gatewaymodul nach Anspruch 1, **dadurch gekennzeichnet, dass** jede Sekundäreinheit (104) das Leistungssignal (Si) eines zusätzlichen elektrischen Moduls (101) verarbeitet, wobei jede Sekundäreinheit durch die Steuerschaltung (1030) der Haupteinheit (103) gesteuert wird.

3. Gatewaymodul nach Anspruch 1 oder 2, **dadurch gekennzeichnet, dass** das elektrische Modul (101) aus wenigstens einem Element (101b), das Elektrizität liefert, gebildet ist.

4. Gatewaymodul nach Anspruch 3, **dadurch gekennzeichnet, dass** jedes elektrische Modul (101) außerdem mindestens einen Mikrowechselrichter (101a) umfasst, um das Leistungssignal (Si) zu liefern.

5. Gatewaymodul nach einem der vorhergehenden Ansprüche, **dadurch gekennzeichnet, dass** die Schnittstellenmittel (1031) eine Kommunikationsschaltung (1035) in der Haupteinheit (103) und eine Kommunikationsschaltung (1035) pro Sekundäreinheit (104) umfassen.

6. Gatewaymodul nach einem der Ansprüche 1 bis 4, **dadurch gekennzeichnet, dass** die Schnittstellenmittel (1031) Passivkopplungselemente umfassen, die ermöglichen, zwischen der Steuerschaltung (1030) und zumindest der Phasenleitung (Li) und der Neutralleitung (N) eines elektrischen Moduls (101), das mit der Haupteinheit oder mit einer Sekundäreinheit verbunden ist, eine Verbindung herzustellen.

7. Gatewaymodul nach Anspruch 6, **dadurch gekennzeichnet, dass** die Schnittstellenmittel (1031) induktive Passivkopplungselemente (1036) oder kapazitive Passivkopplungselemente (1037) oder eine Kombination aus induktiven Passivkopplungselementen (1036) und kapazitiven Passivkopplungselementen (1037) umfassen.

8. Gatewaymodul nach Anspruch 6 oder 7, **dadurch gekennzeichnet, dass** die Schnittstellenmittel (1031) mehrere induktive Kopplungselemente (1036) umfassen, die jeweils eine Primärspule (1036a) enthalten, die induktiv gekoppelt ist mit einer ersten Sekundärspule (1036b), die mit der Phasenleitung (Li) und mit der Neutralleitung (N) eines elektrischen Moduls (101) elektrisch verbunden ist, und mit einer zweiten Sekundärspule (1036c), wobei die Primärspule mit der zweiten Primärspule der Haupteinheit oder der vorhergehenden Sekundäreinheit verbunden ist, während die zweite Sekundärspule mit der Primärspule der folgenden Sekundäreinheit verbunden ist, wobei das induktive Kopplungselement so angeordnet ist, dass die Primärspule mit der Steuerschaltung (1030) verbunden ist.

9. Gatewaymodul nach Anspruch 6 oder 7, **dadurch gekennzeichnet, dass** die Schnittstellenmittel (1031) mehrere kapazitive Kopplungselemente (1037) umfassen, die in jeder Sekundäreinheit (104) angeordnet sind, wobei jedes kapazitive Kopplungselement eine erste Kapazität (1038), die zwischen einen ersten Verbindungsanschluss (1037a) und die Phasenleitung (Li) des zusätzlichen elektrischen Moduls (101), das mit der Sekundäreinheit (104) verbunden ist, geschaltet ist, und eine zweite Kapazität (1039), die zwischen einen zweiten Verbindungsanschluss (1037b) und die Neutralleitung (N) des zusätzlichen elektrischen Moduls (101) geschaltet ist, umfasst, wobei die ersten Verbindungsanschlüsse (1037a) der Sekundäreinheiten miteinander und mit der Phasenleitung des elektrischen Moduls (101) verbunden sind, das mit der Haupteinheit (104) verbunden ist, wobei die zweiten Verbindungsanschlüsse (1037b) der Sekundäreinheiten (104) miteinander und mit der Neutralleitung (N) des elektrischen Moduls (101) verbunden sind, das mit der Haupteinheit (103) verbunden ist, wobei die Steuerschaltung (1030) einen Phasenkoppler (1040) umfasst, der an einem ersten seiner Anschlüsse mit den ersten Verbindungsanschlüssen (1037a) der Sekundäreinheiten und mit einem zweiten seiner Anschlüsse mit den zweiten Verbindungsanschlüssen (1037b) der Sekundäreinheiten verbunden ist.

10. Gatewaymodul nach einem der vorhergehenden Ansprüche, **dadurch gekennzeichnet, dass** am Ausgang der Haupteinheit (103) und der Sekundäreinheiten (104) die gefilterten Phasen (Li) der elektronischen Module (101) in der Weise miteinander verbunden sind, dass ein dreiphasiges Signal für das Stromnetz (107) erzeugt wird.

11. Gatewaymodul nach einem der vorhergehenden Ansprüche, **dadurch gekennzeichnet, dass** jede Sekundäreinheit mit der Haupteinheit durch drahtgebundene Kommunikationsmittel (106) verbunden ist.

12. Gatewaymodul nach einem der vorhergehenden Ansprüche, **dadurch gekennzeichnet, dass** das elektrische Modul ein Solarmodul ist, wobei jedes Element (101b), das Elektrizität liefert, ein Solarpanel ist.

13. Gatewaymodul nach einem der Ansprüche 1 bis 11, **dadurch gekennzeichnet, dass** das elektrische Modul ein Windkraftmodul ist, wobei jedes Element (101 b), das Elektrizität liefert, eine Windkraftanlage ist.

## Claims

1. Gateway module (102) for an electrical installation (100), said gateway module being able to receive, from an electrical module (101), a power signal (Si) via a phase line (Li) and a neutral line (N), said power signal comprising a modulated component for conveying information of said electrical module (101) producing electricity, and able to treat this power signal in order to supply a compatible signal to an electrical network (107), said gateway module comprising a main unit (103) comprising a control circuit (1030) which controls interface means (1031) for managing the information of the modulated component of the power signal (Si), and a filter circuit (1032) for filtering this modulated component and making the power signal compatible with the network (107), **characterised in that** said gateway module (102) comprises furthermore at least one secondary unit (104) provided with a filter circuit (1032) for filtering the power signal (Si) supplied by the phase line (Li) and the neutral line (N) of a supplementary electrical module (101) and provided so that the interface means (1031) can manage the information of the modulated component of the power signal (Si) supplied by the supplementary electrical module (101), said at least one secondary unit being controlled by the control circuit (1030) of the main unit (103).

2. Gateway module according to claim 1, **characterised in that** each secondary unit (104) treats the power signal (Si) of a supplementary electrical module (101), each secondary unit being controlled by the control circuit (1030) of the main unit (103).

3. Gateway module according to claim 1 or 2, **characterised in that** the electrical module (101) is composed of at least one element (101b) supplying electricity.

4. Gateway module according to claim 3, **characterised in that** each electrical module (101) comprises furthermore at least one microinverter (101 a) for supplying the power signal (Si).

5. Gateway module according to one of the preceding claims, **characterised in that** the interface means (1031) comprise one communication circuit (1035) on the main unit (103) and one communication circuit (1035) per secondary unit (104).

6. Gateway module according to one of the claims 1 to 4, **characterised in that** the interface means (1031) comprise passive coupling elements which make it possible to make the connection between the control circuit (1030) and at least the phase line (Li) and the neutral line (N) of an electrical module (101) connected to the main unit or to a secondary unit.

7. Gateway module according to claim 6, **characterised in that** the interface means (103) comprise passive inductive coupling elements (1036) or passive capacitive coupling elements (1037) or a combination of passive inductive coupling elements (1036) and passive capacitive coupling elements (1037).

8. Gateway module according to claim 6 or 7, **characterised in that** the interface means (1031) comprise a plurality of inductive coupling elements (1036), each comprising a coil of the primary (1036a) coupled by induction to a first coil of the secondary (1036b) connected electrically to the phase line (Li) and to the neutral line (N) of an electrical module (101), and to a second coil of the secondary (1036c), the coil of the primary being connected to the second coil of the primary of the main unit or of the preceding secondary unit, whilst the second coil of the secondary is connected to the coil of the primary of the following secondary unit, the inductive coupling element being provided so that the coil of the primary is connected to the control circuit (1030).

9. Gateway module according to claim 6 or 7, **characterised in that** the interface means (1031) comprise a plurality of capacitive coupling elements (1037) provided on each secondary unit (104), each capacitive coupling element comprising a first capacitor (1038) connected between a first connection terminal (1037a) and the phase line (Li) of the supplementary electrical module (101) connected to said secondary unit (104) and also a second capacitor (1039) connected between a second connection terminal (1037b) and the neutral line (N) of the supplementary electrical module (101), the first connection terminals (1037a) of the secondary units being connected to each other and connected to the phase line of the electrical module (101) connected to the main unit (104), the second connection terminals (1037b) of the secondary units (104) being connected to each other and connected to the neutral line (N) of the electrical module (101) connected to the main unit (103), the control circuit (1030) comprising a phase coupler (1040) connected by a first of the terminals thereof to the first connection terminals (1037a) of the secondary units and by a second of the terminals thereof to the second connection terminals (1037b) of the secondary units.

10. Gateway module according to one of the preceding claims, **characterised in that**, at the output of the main unit (103) and of the secondary units (104), the filtered phases (Li) of the electronic modules (101) are interconnected in order to create a triphase signal for the electrical network (107).

11. Gateway module according to one of the preceding claims, **characterised in that** each secondary unit is connected to the main unit by wired communication means (106).

12. Gateway module according to one of the preceding claims, **characterised in that** the electrical module is a solar module, each element (101 b) providing electricity being a solar panel.

13. Gateway module according to one of the claims 1 to 11, **characterised in that** the electrical module is a wind module, each element (101b) providing electricity being a wind turbine.
